# EUROPÄISCHE PATENTSCHRIFT

(11) **EP 3 689 715 B1**
(45) Veröffentlichungstag und Bekanntmachung des Hinweises auf die Patenterteilung: **20.07.2022**
(21) Anmeldenummer: 19156206.5
(22) Anmeldetag: 08.02.2019
(51) Int. Cl.: B62D 21/11

(54) **HILFSRAHMEN FÜR EIN FAHRZEUG, INSBESONDERE EIN ELEKTROFAHRZEUG**
AUXILIARY FRAME FOR A VEHICLE, IN PARTICULAR AN ELECTRIC VEHICLE
FAUX CHÂSSIS POUR UN VÉHICULE, EN PARTICULIER UN VÉHICULE ÉLECTRIQUE

(30) Priorität: 30.01.2019 DE 102019000648
(43) Veröffentlichungstag der Anmeldung: 05.08.2020
(73) Patentinhaber: Autotech Engineering Deutschland GmbH, 33647 Bielefeld (DE); Autotech Engineering S.L., 48340 Amorebieta-Etxano (ES); Gestamp Umformtechnik GmbH, 33647 Bielefeld (DE); Gestamp Navarra, S.A., 31160 Orcoyen (Navarra) (ES)
(72) Erfinder: Haselhorst, Kai, 33775 Versmold (DE); Friesen, Viktor, 33647 Bielefeld (DE)
(74) Vertreter: Cohausz & Florack

(56) Entgegenhaltungen:
- EP-A1- 1 448 425
- CN-Y- 2 913 124
- US-A1- 2017 240 208
- US-A1- 2019 023 322

## Beschreibung

Die Erfindung betrifft einen Hilfsrahmen, insbesondere Vorderachs-Hilfsrahmen, für ein Fahrzeug, insbesondere Elektrofahrzeug, mit einem aus Metallblechen zusammengesetzten Längsträger, der Lageranbindungsstellen für eine Querlenkeranbindung aufweist, wobei die Lageranbindungsstellen in einem zur Radträgerseite hin offenen Lagerabschnitt des Längsträgers ausgebildet sind, wobei der Lagerabschnitt aus einem ersten einschaligen Metallblech und einem zweiten einschaligen Metallblech gebildet ist, wobei das zweite einschalige Metallblech mittels einer Schweißnaht mit dem ersten einschaligen Metallblech verbunden ist, wobei das erste einschalige Metallblech mindestens eine der Lageranbindungsstellen aufweist und wobei das zweite einschalige Metallblech mindestens eine der Lageranbindungsstellen aufweist.

Derartige Hilfsrahmen, auch als Achsträger bezeichnet, sind in vielfältigen Ausführungen bekannt (siehe z. B. DE 10 2012 021 562 A1 und DE 10 2012 111461 A1). Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen.

Elektromotoren von Elektrofahrzeugen können ihr maximales Drehmoment bereits im Stillstand des Fahrzeugs abgeben und brauchen daher, anders als ein Fahrzeugantrieb mit Verbrennungsmotor, in der Regel kein Schaltgetriebe. Die hohen Anfahrdrehmomente von Elektrofahrzeugen erfordern besonders stabil ausgelegte Hilfsrahmenkonstruktionen, an denen die Elektromotoren beispielsweise mittels einer Querbrücke befestigt werden.

Aufgrund der relativ geringen Energiedichte, die eine wiederaufladbare Traktionsbatterie (Akkumulator) gegenüber einem kraftstoffgefüllten Tank bietet, sind Elektrofahrzeuge in der Regel deutlich schwerer als entsprechende Fahrzeuge mit Verbrennungsmotor. Hohe Fahrzeuggewichte ergeben hohe effektive und dynamische Achslasten, die wiederum zu einem erhöhten Fahrwerksverschleiß führen.

Der Einsatz von herkömmlichen Hilfsrahmen für Fahrzeuge mit Verbrennungsmotor würde daher in der Praxis zu einem Bauteilversagen im Elektromotorbetrieb führen. Bei einer falschen oder unangemessenen Auslegung des Hilfsrahmes ist mit einem möglichen Bauteilversagen insbesondere an den Schweißnahtverbindungen zu rechnen, da die Schweißnähte im Vergleich zum eingesetzten Stahlblech üblicherweise deutlich niedrigere Festigkeiten aufweisen. Beispielsweise wird in der Praxis die Festigkeit eines herkömmlichen, einschaligen Querlenkers aus einem Komplexphasen-Stahl CP800 mit einer Streckgrenze von ca. 680 MPa, der fahrzeugseitig mittels einer liegenden angeschweißten Lagerbuchse und einem stehenden eingepressten Lager angebunden ist, durch die Betriebsfestigkeit der Schweißverbindung der angeschweißten Lagerbuchse begrenzt, wobei die Betriebsfestigkeit ca. 300 MPa beträgt.

Die US 2017/0240208 A1 offenbart einen Hilfsrahmen zum Halten von Elementen einer Vorderradaufhängung eines Kraftfahrzeugs. Der Hilfsrahmen umfasst zwei Längsträger zur Anbindung der Vorderradaufhängungselemente, einen vorderen Querträger und einen hinteren Querträger, wobei die Querträger die Längsträger miteinander verbinden. Die Querträger sind in Längs- bzw. Fahrtrichtung des Kraftfahrzeugs im Abstand voneinander angeordnet und durch mindestens zwei seitliche Längsarme miteinander verbunden, die im Abstand voneinander angeordnet sind und jeweils eine Anordnung aufweisen, die im Wesentlichen gerade und parallel zu einer vertikalen Mittenebene des Hilfsrahmens ist. Der vordere Querträger weist zumindest für einen Hauptabschnitt seiner Länge eine im Wesentlichen gerade Form senkrecht zu einer vertikalen Mittenebene des Hilfsrahmens auf. Der hintere Querträger besitzt dagegen eine bogenförmige Gestaltung, die sich im Wesentlichen in einer horizontalen Ebene erstreckt, wobei ein mittlerer Abschnitt sich in einer im Abstand nach vorn angeordneten Position befindet, mit Bezug auf die Bewegungs- oder Fahrtrichtung des Kraftfahrzeugs, relativ zu seitlichen Enden des hinteren Querträgers.

Davon ausgehend liegt der vorliegenden Erfindung die Aufgabe zugrunde, einen Hilfsrahmen der eingangs genannten Art zu schaffen, der bei unverändertem oder nur wenig erhöhtem Gewicht eine deutlich höhere Stabilität, insbesondere höhere Biegefestigkeit und/oder Steifigkeit besitzt.

Diese Aufgabe wird durch einen Hilfsrahmen mit den in Anspruch 1 angegebenen Merkmalen gelöst. Vorteilhafte Ausgestaltungen des erfindungsgemäßen Hilfsrahmens sind in den Unteransprüchen angegeben.

Der erfindungsgemäße Hilfsrahmen hat einen aus Metallblechen zusammengesetzten Längsträger, der Lageranbindungsstellen für eine Querlenkeranbindung aufweist. Die Lageranbindungsstellen sind in einem zur Radträgerseite hin offenen Lagerabschnitt des Längsträgers ausgebildet, wobei der Lagerabschnitt aus einem ersten einschaligen Metallblech und einem zweiten einschaligen Metallblech gebildet ist. Das zweite einschalige Metallblech ist mittels einer Schweißnaht mit dem ersten einschaligen Metallblech verbunden, wobei das erste einschalige Metallblech mindestens eine der Lageranbindungsstellen aufweist und wobei auch das zweite einschalige Metallblech mindestens eine der Lageranbindungsstellen aufweist.

Erfindungsgemäß weist das oben genannte erste einschalige Metallblech im Querschnitt betrachtet einen im Wesentlichen z-profilförmigen Schalenabschnitt auf, der einen der Radträgerseite zugewandten Profilabschnitt, einen der Radträgerseite abgewandten Profilabschnitt und einen die beiden Profilabschnitte miteinander einstückig verbindenden, im montierten Zustand des Hilfsrahmens im Wesentlichen aufrechten Profilabschnitt aufweist, wobei die Schweißnaht mit Abstand zu dem im Wesentlichen aufrechten Profilabschnitt an dem der Radträgerseite abgewandten Profilabschnitt angeordnet ist, wobei die Schweißnaht als freiliegende Schweißnaht an einem Überlappstoß ausgeführt ist, und wobei die Lageranbindungsstellen für die Querlenkeranbindung in Form von mindestens zwei Paaren miteinander fluchtender Durchgangslöcher ausgeführt sind, wobei jedes Paar der miteinander fluchtenden Durchgangslöcher eine stehende oder im Wesentlichen vertikale Anbindungsachse definiert.

Der erfindungsgemäße Hilfsrahmen zeichnet sich gegenüber herkömmlichen Hilfsrahmen der oben genannten Art durch eine höhere Biegefestigkeit sowie Steifigkeit bei unverändertem oder nur wenig erhöhtem Gewicht aus.

Die Erfindung basiert auf der Grundidee, das oben dargelegte Festigkeitsproblem bei Hilfsrahmen zur Aufnahme von leistungsstarken Elektromotoren mittels einer belastungsoptimierten Querlenkeranbindung zu lösen. Aufgrund der hohen Anforderungen an Steifigkeit und Festigkeit der Querlenkeranbindung des Hilfsrahmens werden die eine oder mehreren notwendigen Schweißnähte in der Nähe der Querlenkeranbindung möglichst spannungsarm ausgelegt. Hierzu wird die betreffende Schweißnaht möglichst weit oder ausreichend weit von der Krafteinleitung der Querlenkeranbindung entfernt angeordnet bzw. ausgeführt. Die Schweißnaht liegt somit in einem schwach belasteten Bereich, insbesondere schwach belasteten Spannungsbereich des Hilfsrahmens. Zudem stellt ein durchgehendes Grundmaterial des Hilfsrahmens in unmittelbarer Nähe der fahrzeugseitigen Querlenkeranbindung die erforderliche Festigkeit und Steifigkeit des Hilfsrahmens sicher. Das durchgehende Grundmaterial des Hilfsrahmens in unmittelbarer Nähe der fahrzeugseitigen Querlenkeranbindung ist bei dem erfindungsgemäßen Hilfsrahmen durch das einschalige Metallblech, welches einen im Wesentlichen z-profilförmigen Schalenabschnitt aufweist, verwirklicht. Dieses einschalige Metallblech kann auch als Hauptschale des Hilfsrahmens oder als Hauptschale des Längsträgers des Hilfsrahmens bezeichnet werden.

Das erste einschalige Metallblech (Hauptschale) ist vorzugsweise als Ziehteil ausgeführt. Hierdurch lässt sich der im Wesentlichen z-profilförmige Schalenabschnitt mit hoher Formgenauigkeit kostengünstig herstellen.

Des Weiteren ist es hinsichtlich der Erzielung einer hohen Steifigkeit und Festigkeit der Querlenkeranbindung bei unverändertem oder nur wenig erhöhtem Gewicht des Hilfsrahmens günstig, wenn sich gemäß einer bevorzugten Ausgestaltung der Erfindung das erste einschalige Metallblech (Hauptschale) im Wesentlichen über die gesamte Länge des Längsträgers erstreckt. Hierdurch lässt sich die Anzahl von Schweißnähten und damit die Anzahl möglicher Schwachstellen reduzieren. Ferner ergeben sich hierdurch auch Kostenvorteile bei der Fertigung des Hilfsrahmens.

Der im Wesentlichen aufrechte Profilabschnitt des z-profilförmigen Schalenabschnitts des einschaligen Metallblechs (Hauptschale) kann auch als im Wesentlichen vertikaler Profilabschnitt, als senkrechter Z-Profilabschnitt oder als vertikale Wand bezeichnet werden.

Eine vorteilhafte Ausgestaltung der Erfindung ist dadurch gekennzeichnet, dass der Abstand der besagten Schweißnaht zu dem im Wesentlichen aufrechten Profilabschnitt mindestens das 3-fache, vorzugsweise mindestens das 4-fache, besonders bevorzugt mindestens das 6-fache der Blechdicke des aufrechten Profilabschnitts beträgt. Hierdurch kann ein Auftreten von mechanischen Spannungen in der Schweißnaht weitestgehend reduziert werden.

Beispielsweise wird der erfindungsgemäße Hilfsrahmen so ausgeführt, dass der Abstand der Schweißnaht zu dem aufrechten Profilabschnitt im Bereich von 10 mm bis 30 mm, vorzugsweise im Bereich von 10 mm bis 25 mm, besonders bevorzugt im Bereich von 10 mm bis 20 mm liegt,

Eine bevorzugte Ausgestaltung des erfindungsgemäßen Hilfsrahmens ist dadurch gekennzeichnet, dass die Querlenkeranbindung, d. h. die Anbindung des jeweiligen Querlenkers durch mindestens zwei stehende Querlenker-Lager verwirklicht ist. Wenn ausschließlich stehende Querlenker-Lager zur Querlenkeranbindung an dem Längsträger ausgebildet werden, wird keine Schweißverbindung im unmittelbaren oder nahen Bereich der Querlenkeranbindung benötigt und somit angeschweißte Halterung für eine liegende Lagerbuchse eliminiert.

Die stehenden Querlenker-Lager können dabei beispielsweise aus mit dem Querlenker verbundene Gummi- oder Elastomerbuchsen bestehen, die jeweils einen mit zwei miteinander fluchtenden Lageranbindungsstellen, z. B. Durchgangslöchern, des Längsträgers verbundenen Bolzen, vorzugsweise Schraubbolzen, ringförmig umgeben.

Der aufrechte Profilabschnitt des z-profilförmigen Schalenabschnitts des Längsträgers ermöglicht in unmittelbarer Nähe der Querlenkeranbindung die Aufnahme hoher Kräfte und die Erzielung hoher Steifigkeitswerte. Eine vorteilhafte Ausgestaltung der Erfindung sieht hierzu vor, dass mindestens zwei der Lageranbindungsstellen in Form von Durchgangslöchern ausgebildet sind, die eine stehende oder im Wesentlichen vertikale Anbindungsachse definieren, wobei der kürzeste Abstand des im Wesentlichen aufrechten Profilabschnitts zu der Anbindungsachse in einem Bereich liegt, dessen Untergrenze dem 2,8-fachen, vorzugsweise dem 3-fachen, besonders bevorzugt dem 3,5-fachen des kleinsten Durchmessers eines oder jedes der Durchgangslöcher entspricht und dessen Obergrenze dem 5-fachen, vorzugsweise dem 4,5-fachen, besonders bevorzugt dem 4,2-fachen des kleinsten Durchmessers eines oder jedes der Durchgangslöcher entspricht.

Beispielsweise wird der erfindungsgemäße Hilfsrahmen so ausgeführt, dass der kürzeste Abstand des im Wesentlichen aufrechten Profilabschnitts zu der Anbindungsachse in einem Bereich von 40 mm bis 80 mm, vorzugsweise in einem Bereich von 50 mm bis 70 mm liegt. Anstelle der Anbindungsachse kann als Bezugsstelle für die Messung des kürzesten Abstands des im Wesentlichen aufrechten Profilabschnitts auch der Außendurchmesser des stehenden Querlenker-Lagers gewählt werden. Bezogen auf den Außendurchmesser des stehenden Querlenker-Lagers liegt der kürzeste Abstand des im Wesentlichen aufrechten Profilabschnitts beispielsweise in einem Bereich von 20 mm bis 40 mm, vorzugsweise in einem Bereich von 25 mm bis 35 mm.

Eine weitere vorteilhafte Ausgestaltung der Erfindung ist dadurch gekennzeichnet, dass der der Radträgerseite abgewandte Profilabschnitt einen ebenen Verbindungsabschnitt aufweist, an dem die Schweißnaht als im Wesentlichen ebene Schweißnaht ausgeführt ist. Diese Ausgestaltung trägt ebenfalls zur Reduzierung von mechanischen Spannungen in der Schweißnaht bei.

Die Schweißnaht ist erfindungsgemäß als freiliegende Schweißnaht, vorzugsweise als freiliegende Kehlschweißnaht an einem Überlappstoß ausgeführt. Anders ausgedrückt wird die Schweißnaht nicht durch Anbauteile verdeckt. Die Schweißnaht bleibt somit an dem fertigen Hilfsrahmen gut einsehbar. Diese "Einsehbarkeit" führt zu fertigungstechnischen Vorteilen im Rahmen der Qualitätskontrolle.

Das zweite einschalige Metallblech, welches zusammen mit der Hauptschale den zur Radträgerseite hin offenen Lagerabschnitt des Längsträgers zur Querlenkeranbindung begrenzt, erstreckt sich vorzugsweise (lediglich) über eine Teillänge des Längsträgers. Diese Ausgestaltung wirkt sich günstig hinsichtlich eines geringen Gewichts des Hilfsrahmens aus. Das zweite einschalige Metallblech ist vorzugsweise an der Unterseite des ersten einschaligen Metallblechs angeordnet bzw. angeschweißt. Hierdurch wird die Ausführung der Schweißnaht als freiliegende Schweißnaht und somit die "Einsehbarkeit" der Schweißnaht begünstigt.

Eine weitere Ausgestaltung des erfindungsgemäßen Hilfsrahmens ist dadurch gekennzeichnet, dass an dem z-profilförmigen Schalenabschnitt mindestens ein Anbauteil aus einer einen Querträger, einen Lenkungsschutz, einen Anbindungsturm und/oder ein Konsolblech umfassenden Gruppe angebunden, vorzugsweise angeschweißt ist. Der z-profilförmige Schalenabschnitt dient somit zur Aufnahme mindestens eines solchen Anbauteils. Hierdurch kann die Steifigkeit und Festigkeit der Querlenkeranbindung bei unverändertem oder nur wenig erhöhtem Gewicht des Hilfsrahmens weiter verbessert werden.

Nach einer weiteren Ausgestaltung der Erfindung ist an der Oberseite des ersten einschaligen Metallblechs ein drittes einschaliges Metallblech angeordnet, das mittels mindestens zweier Schweißnähte mit dem ersten einschaligen Metallblech (Hauptschale) verbunden ist. Auch durch diese Ausgestaltung kann die Steifigkeit und Festigkeit der Querlenkeranbindung bei unverändertem oder nur wenig erhöhtem Gewicht des Hilfsrahmens weiter verbessert werden. Vorzugsweise sind dabei mindestens eine oder mindestens zwei der Schweißnähte als im Wesentlichen ebene Schweißnähte ausgeführt. Diese Ausgestaltung trägt wiederum zur Reduzierung von mechanischen Spannungen in der betreffenden Schweißnaht bei.

Der erfindungsgemäße Hilfsrahmen weist vorzugsweise keine oder nahezu keine verdeckten Schweißnähte auf. Alle wesentlichen Anbauteile können auf die Oberseite der Hauptschale gesetzt und mit dieser verschweißt werden.

Der erfindungsgemäße Hilfsrahmen bietet eine hohe Integrationsmöglichkeit für verschiedene Funktionen, denn viele Anbindungsstellen lassen sich in einem Bauteil (Schalenelement) oder wenigen Bauteilen (Schalenelementen) des erfindungsgemäßen Hilfsrahmens integrieren. Insbesondere lassen sich mit dem erfindungsgemäßen Hilfsrahmen relativ einfach geringe Fertigungstoleranzen erreichen, da alle wesentlichen Anbindungsstellen in einem Einzelteil (Schalenelement) integriert werden können.

Eine weitere vorteilhafte Ausgestaltung des erfindungsgemäßen Hilfsrahmens ist dadurch gekennzeichnet, dass das erste einschalige Metallblech (Hauptschale) mit einem Abschnitt eines Querträgers einstückig ausgeführt ist. Hierdurch ergibt sich eine höhere Funktionsintegration. Insbesondere können durch diese Ausgestaltung die Anzahl der Einzelteile des Hilfsrahmens verringert und somit Fertigungskosten gespart werden. Eine noch höhere Funktionsintegration lässt sich erzielen, wenn gemäß einer alternativen optionalen Ausgestaltung des erfindungsgemäßen Hilfsrahmens das erste einschalige Metallblech mit einem entsprechenden, im Wesentlichen spiegelsymmetrischen, einschaligen Metallblech eines zweiten Längsträgers einstückig ausgeführt ist. Insbesondere ergibt sich dabei ein großes einschaliges Bauteil bzw. eine große Hauptschale, welches/welche an den Außenseiten der Längsträgerabschnitte zwei im Wesentlichen z-profilförmige Schalenabschnitte aufweist. Diese Ausgestaltung bietet besondere Vorteile hinsichtlich der Fertigungskosten.

Nachfolgend wird die Erfindung anhand einer ein Ausführungsbeispiel darstellenden Zeichnung näher erläutert. Es zeigen:
- Fig.1: einen Hilfsrahmen für ein Fahrzeug, insbesondere Elektrofahrzeug, mit zur Radträgerseite hin offenen Lagerabschnitten zur Anbindung von Querlenkern, in einer perspektivischen Darstellung;
- Fig. 2: eine Draufsicht auf miteinander verbundene Metallblechteile eines Hilfsrahmens gemäß Fig. 1 in einer Vorfertigungsstufe;
- Fig. 3: das obere linke, einschalige Metallblech des in Fig. 2 gezeigten Teileverbundes, welches einen im Wesentlichen z-profilförmigen Schalenabschnitt aufweist, in einer perspektivischen Darstellung;
- Fig. 4a und 4b: Querschnittansichten des in Fig. 2 gezeigten Teileverbundes entlang der Schnittlinien IVa-IVa und IVb-IVb in Fig. 2;
- Fig. 5a und 5b: einen Abschnitt des Teileverbundes gemäß Fig. 2 mit dem oberen linksseitigen, einschaligen Metallblech in einer Unteransicht, wobei in den Lagerabschnitt zur Anbindung eines Querlenkers ein Querlenker eingesetzt ist (Fig. 5a) bzw. der Lagerabschnitt durch ein zweites einschaliges Metall, welches mit dem oberen einschaligen Metallblech verschweißt ist, abgedeckt ist (Fig. 5b); und

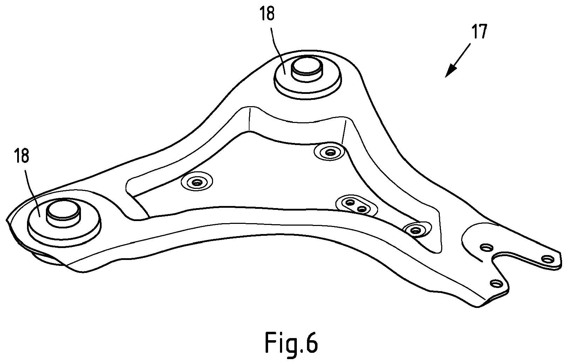

- Fig. 6: den Querlenker aus den Fig. 5a und 5b in einer perspektivischen Darstellung.

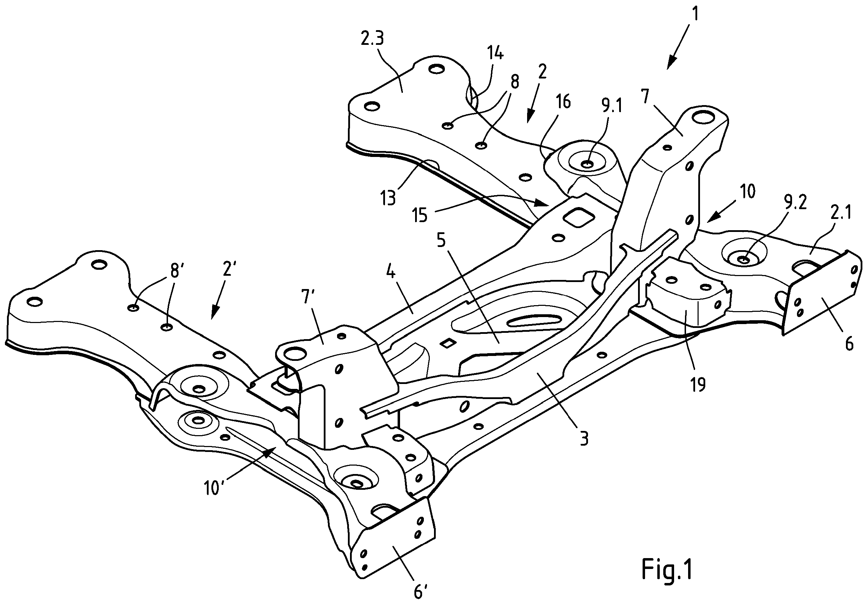

In Fig. 1 ist ein Hilfsrahmen 1 für ein Kraftfahrzeug, insbesondere ein Elektrofahrzeug gezeigt. Der Hilfsrahmen 1, der hier zum Beispiel als Vorderachs-Hilfsrahmen ausgeführt ist, ist aus Längsträgern und Querträgern aufgebaut. Unter dem Begriff "Längsträger" werden hier Tragelemente oder Abschnitte von Tragelementen des Hilfsrahmens verstanden, die sich im montierten Zustand des Hilfsrahmens 1 im Wesentlichen entlang der Längsachse des betreffenden Kraftfahrzeuges erstrecken. Die Querträger erstrecken sich dagegen im montierten Zustand des Hilfsrahmens 1 im Wesentlichen quer zu der Längsachse des Kraftfahrzeuges.

Die Längsträger und Querträger sind aus Metallblechen (Blechschalen) gefertigt. In Fig. 1 sind insbesondere ein linker Längsträger 2, ein rechter Längsträger 2', ein vorderer Querträger 3 und eine als Querträger dienende Oberschale 4 gezeigt. Des Weiteren sind eine als Lenkungsschutz dienende Blechschale 5, Crash-Absorber-Anbindungsbleche 6,6' und sogenannte Turmschalen 7, 7', die der Anbindung des Hilfsrahmens 1 an die Fahrzeugkarosserie dienen, zu erkennen. Zudem wird der Hilfsrahmen 1 mit mindestens einer (hier nicht gezeigten) Querbrücke versehen, die an den Längsträgern 2, 2' mittels Schraubverbindungen an Anbindungslöchern 8,8' befestigt wird. Die Querbrücke dient der Lagerung eines Fahrzeugantriebsaggregates, beispielsweise eines Elektromotors. Alternativ kann aber auch ein Verbrennungsmotor oder ein Getriebe an der Querbrücke gelagert sein.

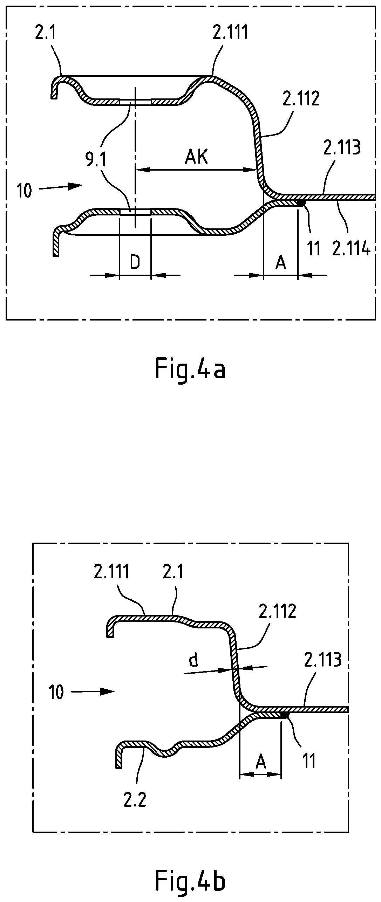

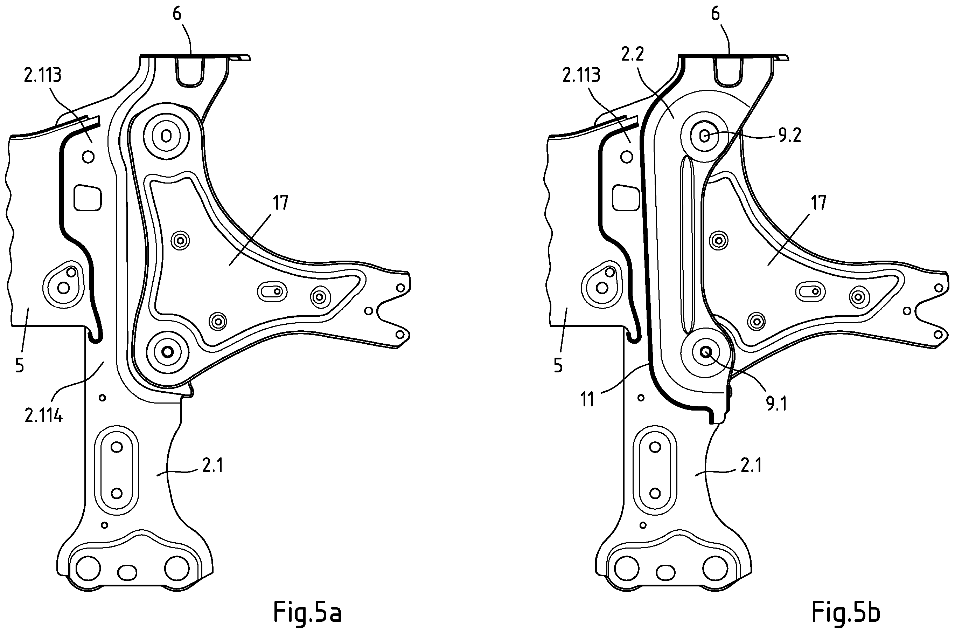

Der jeweilige Längsträger 2, 2' ist aus Metallblechen (Blechschalen) zusammengesetzt. Er weist Lageranbindungsstellen 9.1, 9.2 für eine Querlenkeranbindung auf. Die Lageranbindungsstellen 9.1, 9.2 sind in einem zur Radträgerseite hin offenen Lagerabschnitt 10,10' des jeweiligen Längsträgers 2, 2' ausgebildet (Fig. 1). Der Lagerabschnitt 10 am linken Längsträger 2 ist aus einem ersten einschaligen Metallblech 2.1 und einem zweiten einschaligen Metallblech 2.1 gebildet. Das Metallblech 2.2 ist an der Unterseite des Metallblechs 2.1 angeordnet (vgl. Fig. 4a und 5b).

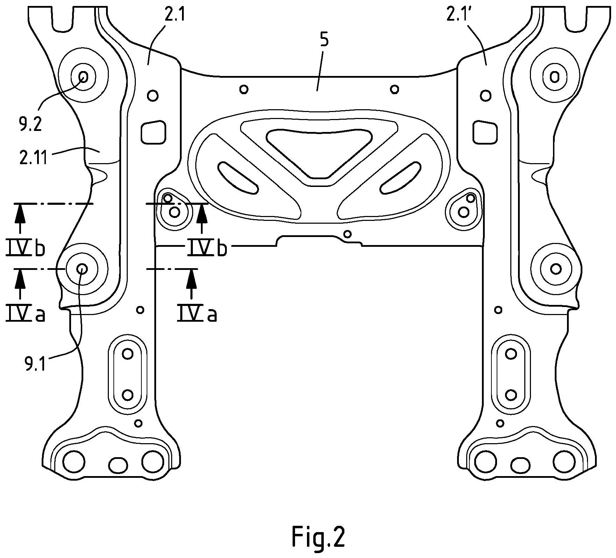

Die beiden einschaligen Metallbleche 2.1, 2.2 sind mittels einer Schweißnaht 11 miteinander verbunden. Das erste Metallblech 2.1 kann auch als Hauptschale und das zweite Metallblech 2.2 als Unterschale oder Abdeckblech bezeichnet werden. Das erste Metallblech (Hauptschale) 2.1 ist als Ziehteil ausgeführt und erstreckt sich vorzugsweise im Wesentlichen über die gesamte Länge des Längsträgers 2 (vgl. Fig. 1 und 2). Das zweite Metallblech (Abdeckblech) 2.2 erstreckt sich über eine Teillänge des Längsträgers 2 und beginnt oder endet, wie das Metallblech 2.1, vorzugsweise am vorderen Ende des Längsträgers 2 bzw. unmittelbar hinter dem Crash-Absorber-Anbindungsblech 6.

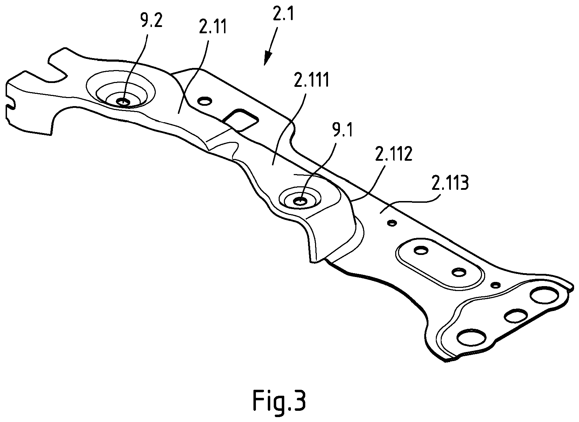

Das erste Metallblech (Hauptschale) 2.1 hat im Querschnitt betrachtet einen im Wesentlichen z-profilförmigen Schalenabschnitt 2.11, der einen der Radträgerseite zugewandten Profilabschnitt 2.111, einen der Radträgerseite abgewandten Profilabschnitt 2.113 und einen die beiden Profilabschnitte 2.111, 2.113 miteinander einstückig verbindenden, im montierten Zustand des Hilfsrahmens 1 im Wesentlichen aufrechten Profilabschnitt 2.112 aufweist (vgl. insbesondere Figuren 3, 4a und 4b). Die Schweißnaht 11, mittels der das zweite Metallblech (Abdeckblech) 2.2 mit dem ersten Metallblech 2.1 verbunden ist, ist mit Abstand (A) zu dem im Wesentlichen aufrechten Profilabschnitt 2.112 an dem der Radträgerseite abgewandten Profilabschnitt 2.113 angeordnet. Die Schweißnaht 11 liegt dabei in einem schwach belasteten Bereich des Hilfsrahmens 1.

Der der Radträgerseite abgewandte Profilabschnitt 2.113 des Metallblechs 2.1 weist vorzugsweise einen ebenen Verbindungsabschnitt 2.114 auf, an dem die Schweißnaht 11 als ebene Schweißnaht ausgeführt ist. Die Schweißnaht 11 wird zudem nicht durch Anbauteile verdeckt. Die Schweißnaht 11 ist somit als freiliegende Schweißnaht, vorzugsweise als freiliegende Kehlschweißnaht an einem durch die beiden Metallbleche 2.1, 2.2 definierten Überlappstoß ausgeführt.

Der Abstand der Schweißnaht 11 zu dem aufrechten Profilabschnitt 2.112 beträgt beispielsweise mindestens das 3-fache, vorzugsweise mindestens das 4-fache, besonders bevorzugt mindestens das 6-fache der Blechdicke d des aufrechten Profilabschnitts 2.112 beträgt. Die Blechdicke d des Profilabschnitts 2.112 kann beispielsweise im Bereich von 1,8 mm bis 3,5 mm, insbesondere im Bereich von 2,0 mm bis 3,0 mm liegen. Der Abstand A der Schweißnaht 11 zu dem aufrechten Profilabschnitt 2.112 liegt beispielsweise im Bereich von 10 mm bis 30 mm, vorzugsweise im Bereich von 10 mm bis 20 mm.

Die Lageranbindungsstellen 9.1, 9.2 für eine Querlenkeranbindung sind an dem ersten Metallblech 2.1 und an dem zweiten Metallblech 2.2 ausgebildet. Die Lageranbindungsstellen 9.1, 9.2 für die Querlenkeranbindung sind in Form von mindestens zwei Paaren miteinander fluchtender Durchgangslöcher ausgeführt, wobei jedes Paar der miteinander fluchtenden Durchgangslöcher eine stehende oder im Wesentlichen vertikale Anbindungsachse (Querlenkeranbindungsachse) 12 definiert. Die Durchgangslöcher mindestens eines der Paare sind dabei vorzugsweise als Langlöcher ausgebildet. Insbesondere in den Figuren 1 und 2 ist zu erkennen, dass die Längsachse der Langlöcher im Wesentlichen parallel zur Längsachse des jeweiligen Längsträgers 2 bzw. parallel zu einer die vordere und die hintere Lageranbindungsstelle 9.1, 9.2 verbindenden Gerade verläuft.

Der kürzeste Abstand Ak des im Wesentlichen aufrechten Profilabschnitts 2.112 des Schalenabschnitts 2.11 zu der stehenden oder im Wesentlichen vertikalen Querlenkeranbindungsachse 12 liegt beispielsweise in einem Bereich, dessen Untergrenze dem 2,8-fachen, vorzugsweise dem 3-fachen, besonders bevorzugt dem 3,5-fachen des kleinsten Durchmessers D eines oder jedes der beiden Durchgangslöcher entspricht, während die Obergrenze dieses Abstandsbereichs dem 5-fachen, vorzugsweise dem 4,5-fachen, besonders bevorzugt dem 4,2-fachen des kleinsten Durchmessers D eines oder jedes der beiden Durchgangslöcher entspricht.

Zusätzlich kann der Längsträger 2 mindestens ein weiteres oder drittes einschaliges Metallblech 2.3 aufweisen, das auf der Oberseite des ersten Metallblechs 2.1 angeordnet ist und mit demselben einen Hohlraum definiert. Das Metallblech 2.3 kann auch als Oberschale bezeichnet werden. Es ist mit dem ersten Metallblech 2.1 starr verbunden, beispielsweise mittels mindestens zweier Schweißnähte 13, 14. Vorzugsweise ist mindestens eine dieser Schweißnähte als im Wesentlichen ebene Schweißnaht ausgeführt. Das dritte Metallblech (Oberschale) 2.3 erstreckt sich beispielsweise von dem dem Crash-Absorber-Anbindungsblech 6 abgewandten oder hinteren Ende des Längsträgers 2 oder ersten Metallblechs 2.1 bis dem hinteren Querträger 4 und ist vorzugsweise sowohl mit dem Querträger 4 als auch dem z-profilförmigen Schalenabschnitt 2.11 des Metallblechs 2.1 mittels bogenförmiger bzw. nicht-ebener Schweißnähte 15, 16 verbunden.

Der aufrechte Profilabschnitt 2.112 des z-profilförmigen Schalenabschnitts 2.10 des Längsträgers 2 ermöglicht in unmittelbarer Nähe der Lageranbindung des Querlenkers 17, die hier vorzugsweise in Form einer Verschraubung von Gummi- oder Elastomerbuchsen 18 ausgeführt ist, die Aufnahme hoher Kräfte und die Erzielung einer hohen Hilfsrahmensteifigkeit. Insbesondere wird durch den z-profilförmigen Schalenabschnitt 2.11 die Möglichkeit geschaffen, eine kritische Schweißnaht im Bereich eines aufrechten Profilabschnitts nahe der Querlenkeranbindung, die dort durch hohe Spannungen, welche beim Antrieb eines Elektrofahrzeuges auftreten, belastet wird, zu vermeiden und die Schweißnaht nach innen zu dem unteren der Radträgerseite abgewandten Profilabschnitt 2.113 des z-profilförmigen Schalenabschnitts 2.11 zu verlegen. Zusätzlich dient der z-profilförmige Schalenabschnitt 2.11 zur Aufnahme von Anbauteilen wie z. B. eines Querträgers 3, 4, eines Lenkungsschutzes 5, eines Anbindungsturms 7 und/oder eines Konsolblechs 19.

Die Metallbleche (Metallschalen) 2.1, 2.2, 2.3 sind vorzugsweise aus Stahlblech hergestellt und weisen vorzugsweise unterschiedliche Blechdicken und/oder unterschiedliche Materialgüten, insbesondere Streckgrenzen und Zugfestigkeiten auf. So kann beispielsweise das Metallblech (Oberschale) 2.3 eine geringere Blechdicke aufweisen als das Metallblech (Hauptschale) 2.1.

Die Ausführung der Erfindung ist nicht auf die in der Zeichnung dargestellten Beispiele beschränkt. Vielmehr umfasst die Erfindung weitere Ausführungsvarianten, die auch bei einer von den gezeigten Beispielen abweichenden Gestaltung von der in den beigefügten Ansprüchen angegebenen Erfindung Gebrauch machen. So kann beispielsweise das erste einschalige Metallblech 2.1 mit einem Abschnitt eines mittleren Bauteils, beispielsweise eines Querträgers oder Lenkungsschutzes 5 einstückig ausgeführt sein. Auch liegt es im Rahmen der vorliegenden Erfindung, das erste einschalige Metallblech 2.1 mit einem entsprechenden, im Wesentlichen spiegelsymmetrischen, einschaligen Metallblech 2.1' des zweiten Längsträgers 2' einstückig auszuführen.

## Patentansprüche

1. Hilfsrahmen (1), insbesondere Vorderachs-Hilfsrahmen, für ein Fahrzeug, insbesondere Elektrofahrzeug, mit
einem aus Metallblechen zusammengesetzten Längsträger (2), der Lageranbindungsstellen (9.1, 9.2) für eine Querlenkeranbindung aufweist,
wobei die Lageranbindungsstellen (9.1, 9.2) in einem zur Radträgerseite hin offenen Lagerabschnitt (10) des Längsträgers ausgebildet sind,
wobei der Lagerabschnitt (10) aus einem ersten einschaligen Metallblech (2.1) und einem zweiten einschaligen Metallblech (2.2) gebildet ist,
wobei das zweite einschalige Metallblech (2.2) mittels einer Schweißnaht (11) mit dem ersten einschaligen Metallblech (2.1) verbunden ist,
wobei das erste einschalige Metallblech (2.1) mindestens eine der Lageranbindungsstellen (9.1, 9.2) aufweist und
wobei das zweite einschalige Metallblech (2.2) mindestens eine der Lageranbindungsstellen (9.1, 9.2) aufweist,
**dadurch gekennzeichnet, dass**
das erste einschalige Metallblech (2.1) im Querschnitt betrachtet einen im Wesentlichen z-profilförmigen Schalenabschnitt (2.11) aufweist, der einen der Radträgerseite zugewandten Profilabschnitt (2.111), einen der Radträgerseite abgewandten Profilabschnitt (2.113) und einen die beiden Profilabschnitte miteinander einstückig verbindenden, im montierten Zustand des Hilfsrahmens (1) im Wesentlichen aufrechten Profilabschnitt (2.112) aufweist,
wobei die Schweißnaht (11) mit Abstand (A) zu dem im Wesentlichen aufrechten Profilabschnitt (2.112) an dem der Radträgerseite abgewandten Profilabschnitt (2.113) angeordnet ist,
wobei die Schweißnaht (11) als freiliegende Schweißnaht an einem Überlappstoß ausgeführt ist, und
wobei die Lageranbindungsstellen (9.1, 9.2) für die Querlenkeranbindung in Form von mindestens zwei Paaren miteinander fluchtender Durchgangslöcher ausgeführt sind, wobei jedes Paar der miteinander fluchtenden Durchgangslöcher eine stehende oder im Wesentlichen vertikale Anbindungsachse (12) definiert.

2. Hilfsrahmen nach Anspruch 1, **dadurch gekennzeichnet, dass** der Abstand (A) der Schweißnaht (11) zu dem im Wesentlichen aufrechten Profilabschnitt (2.112) mindestens das 3-fache, vorzugsweise mindestens das 4-fache, besonders bevorzugt mindestens das 6-fache der Blechdicke (d) des aufrechten Profilabschnitts (2.112) beträgt.

3. Hilfsrahmen nach Anspruch 1 oder 2, **dadurch gekennzeichnet, dass** mindestens zwei der Lageranbindungsstellen (9.1, 9.2) in Form von Durchgangslöchern ausgebildet sind, die eine stehende oder im Wesentlichen vertikale Anbindungsachse (12) definieren, wobei der kürzeste Abstand (Ak) des im Wesentlichen aufrechten Profilabschnitts (2.112) zu der Anbindungsachse (12) in einem Bereich liegt, dessen Untergrenze dem 2,8-fachen, vorzugsweise dem 3-fachen, besonders bevorzugt dem 3,5-fachen des kleinsten Durchmessers (D) eines oder jedes der Durchgangslöcher entspricht und dessen Obergrenze dem 5-fachen, vorzugsweise dem 4,5-fachen, besonders bevorzugt dem 4,2-fachen des kleinsten Durchmessers (D) eines oder jedes der Durchgangslöcher entspricht.

4. Hilfsrahmen nach einem der Ansprüche 1 bis 3, **dadurch gekennzeichnet, dass** der der Radträgerseite abgewandte Profilabschnitt (2.113) einen ebenen Verbindungsabschnitt (2.114) aufweist, an dem die Schweißnaht (11) als im Wesentlichen ebene Schweißnaht ausgeführt ist.

5. Hilfsrahmen nach einem der Ansprüche 1 bis 4, **dadurch gekennzeichnet, dass** das erste einschalige Metallblech (2.1) als Ziehteil ausgeführt ist.

6. Hilfsrahmen nach einem der Ansprüche 1 bis 5, **dadurch gekennzeichnet, dass** sich das erste einschalige Metallblech (2.1) im Wesentlichen über die gesamte Länge des Längsträgers (2) erstreckt.

7. Hilfsrahmen nach einem der Ansprüche 1 bis 6, **dadurch gekennzeichnet, dass** sich das zweite einschalige Metallblech (2.2) über eine Teillänge des Längsträgers (2) erstreckt.

8. Hilfsrahmen nach einem der Ansprüche 1 bis 7, **dadurch gekennzeichnet, dass** an dem z-profilförmigen Schalenabschnitt mindestens ein Anbauteil aus einer einen Querträger (3, 4), einen Lenkungsschutz (5), einen Anbindungsturm (7) und/oder ein Konsolblech (19) umfassenden Gruppe angebunden, vorzugsweise angeschweißt ist.

9. Hilfsrahmen nach einem der Ansprüche 1 bis 8, **dadurch gekennzeichnet, dass** das zweite einschalige Metallblech (2.2) an der Unterseite des ersten einschaligen Metallblechs (2.1) angeordnet ist.

10. Hilfsrahmen nach einem der Ansprüche 1 bis 9, **dadurch gekennzeichnet, dass** an der Oberseite des ersten einschaligen Metallblechs (2.1) ein drittes einschaliges Metallblech (2.3) angeordnet ist, das mittels mindestens zweier Schweißnähte (13,14) mit dem ersten einschaligen Metallblech (2.1) verbunden ist.

11. Hilfsrahmen nach Anspruch 10, **dadurch gekennzeichnet, dass** mindestens eine oder mindestens zwei der Schweißnähte (13,14) als im Wesentlichen ebene Schweißnähte ausgeführt sind.

12. Hilfsrahmen nach einem der Ansprüche 1 bis 11, **dadurch gekennzeichnet, dass** das erste einschalige Metallblech (2.1) mit einem Abschnitt eines Querträgers (4) oder eines als Lenkungsschutz dienenden Bleches (5) einstückig ausgeführt ist.

13. Hilfsrahmen nach einem der Ansprüche 1 bis 12, **dadurch gekennzeichnet, dass** das erste einschalige Metällblech (2.1) mit einem entsprechenden einschaligen Metallblech (2.1') eines zweiten Längsträgers (2') einstückig ausgeführt ist.

## Claims

1. Auxiliary frame (1), especially front axle auxiliary frame, for a vehicle, especially an electric vehicle, with
a longitudinal member (2) composed of metal sheets, which has bearing connection points (9.1, 9.2) for a transverse control arm connection,
wherein the bearing connection points (9.1, 9.2) are formed in a bearing section (10) of the longitudinal member which is open towards the wheel carrier side,
wherein the bearing section (10) is formed from a first single-shell metal sheet (2.1) and a second single-shell metal sheet (2.2),
wherein the second single-shell metal sheet (2.2) is connected to the first single-shell metal sheet (2.1) by means of a weld seam (11),
wherein the first single-shell metal sheet (2.1) has at least one of the bearing connection points (9.1, 9.2) and
wherein the second single-shell metal sheet (2.2) has at least one of the bearing connection points (9.1, 9.2),
**characterised in that**
the first single-shell metal sheet (2.1), when viewed in cross-section, has a substantially Z-shaped shell section (2.11) which has a profile section (2.111) facing the wheel carrier side, a profile section (2.113) facing away from the wheel carrier side and a profile section (2.112) which connects the two profile sections to one another in one piece and is substantially upright in the assembled state of the auxiliary frame (1),
wherein the weld seam (11) is arranged at a distance (A) from the substantially upright profile section (2.112) on the profile section (2.113) facing away from the wheel carrier side,
wherein the weld seam (11) is designed as an exposed weld seam on an overlap joint, and
wherein the bearing connection points (9.1, 9.2) for the transverse control arm connection are designed in the form of at least two pairs of aligned through holes, each pair of aligned through holes defining an upright or substantially vertical connection axis (12).

2. The auxiliary frame according to claim 1, **characterised in that** the distance (A) of the weld seam (11) from the substantially upright profile section (2.112) is at least 3 times, preferably at least 4 times, particularly preferably at least 6 times the sheet thickness (d) of the upright profile section (2.112).

3. The auxiliary frame according to claim 1 or 2, **characterised in that** at least two of the bearing connection points (9.1, 9.2) are in the form of through holes defining an upright or substantially vertical connection axis (12), the shortest distance (Ak) of the substantially upright profile section (2.112) to the connection axis (12) is in a range whose lower limit corresponds to 2.8 times, preferably 3 times, particularly preferably 3.5 times, the smallest diameter (D) of one or each of the through holes and whose upper limit corresponds to 5 times, preferably 4.5 times, particularly preferably 4.2 times, the smallest diameter (D) of one or each of the through holes.

4. The auxiliary frame according to any one of claims 1 to 3, **characterized in that** the profile section (2.113) facing away from the wheel carrier side has a plane connecting section (2.114) on which the weld seam (11) is designed as a substantially plane weld seam.

5. The auxiliary frame according to any one of claims 1 to 4, **characterized in that** the first single-shell metal sheet (2.1) is designed as a drawn part.

6. The auxiliary frame according to any of claims 1 to 5, **characterized in that** the first single-shell metal sheet (2.1) extends substantially over the entire length of the longitudinal member (2).

7. The auxiliary frame according to any one of claims 1 to 6, **characterized in that** the second single-shell metal sheet (2.2) extends over a partial length of the longitudinal member (2).

8. The auxiliary frame according to any one of claims 1 to 7, **characterized in that** at least one add-on part from a group comprising a cross member (3, 4), a steering guard (5), a connecting tower (7) and/or a bracket plate (19) is attached, preferably welded, to the Z-shaped shell section.

9. The auxiliary frame according to any one of claims 1 to 8, **characterized in that** the second single-shell metal sheet (2.2) is arranged on the underside of the first single-shell metal sheet (2.1).

10. The auxiliary frame according to any one of claims 1 to 9, **characterized in that** a third single-shell metal sheet (2.3) is arranged on the upper side of the first single-shell metal sheet (2.1) and is connected to the first single-shell metal sheet (2.1) by means of at least two weld seams (13, 14).

11. The auxiliary frame according to claim 10, **characterized in that** at least one or at least two of the weld seams (13, 14) are designed as substantially plane weld seams.

12. The auxiliary frame according to any one of claims 1 to 11, **characterized in that** the first single-shell metal sheet (2.1) is made in one piece with a section of a cross member (4) or a sheet (5) serving as steering protection.

13. The auxiliary frame according to any one of claims 1 to 12, **characterized in that** the first single-shell metal sheet (2.1) is made in one piece with a corresponding single-shell metal sheet (2.1') of a second longitudinal member (2').

## Revendications

1. Faux-châssis (1), plus particulièrement faux-châssis d'essieu avant, pour un véhicule, notamment un véhicule électrique, avec un longeron (2) composé de tôles métalliques, qui présente des points d'attache au palier (9.1, 9.2) pour une attache de bras oscillant transversal,
dans lequel les points d'attache au palier (9.1, 9.2) sont conçus dans une section de palier (10) du longeron, ouverte vers le côté du support de roue,
dans lequel la section de palier (10) est formée à partir d'une première tôle métallique à simple coque (2.1) et d'une deuxième tôle métallique à simple coque (2.2),
dans lequel la deuxième tôle métallique à simple coque (2.2) est reliée à la première tôle métallique à simple coque (2.1) au moyen d'un cordon de soudure (11),
dans lequel la première tôle métallique à simple coque (2.1) présente au moins l'un des points d'attache au palier (9.1, 9.2) et
dans lequel la deuxième tôle métallique à simple coque (2.2) présente au moins l'un des points d'attache au palier (9.1, 9.2),
**caractérisé en ce que** la première tôle métallique à simple coque (2.1), vue en section transversale, présente une section de coque (2.11) essentiellement en forme de profil z, qui présente une section de profil (2.111) orientée vers le côté du support de roue, une section de profil (2.113) opposée au support de roue et une section de profil (2.112), reliant ensemble d'une seule pièce les deux sections de profil, essentiellement droite à l'état monté du faux-châssis (1),
dans lequel le cordon de soudure (11) est disposé sur la section de profil opposée au côté du support de roue, avec un écartement (A) par rapport à la section de profil (2.112) essentiellement droite,
dans lequel le cordon de soudure (11) est réalisé comme un cordon de soudure mis à nu sur un assemblage à recouvrement, et
dans lequel les points d'attache au palier (9.1, 9.2) pour l'attache de bras oscillant transversal sont réalisés en forme d'au moins deux paires de trous de passage s'alignant entre eux, chaque paire des trous de passage s'alignant entre eux définissant un axe d'attache (12) dressé ou essentiellement vertical.

2. Faux-châssis selon la revendication 1, **caractérisé en ce que** l'écartement (A) du cordon de soudure (11) par rapport à la section de profil (2.112) essentiellement droite est de au moins 3 fois, de préférence, au moins 4 fois, de préférence encore, au moins 6 fois l'épaisseur de tôle (d) de la section de profil (2.112) droite.

3. Faux-châssis selon la revendication 1 ou 2, **caractérisé en ce qu'**au moins deux des points d'attache au palier (9.1, 9.2) sont conçus en forme de trous de passage qui définissent un axe d'attache (12) dressé ou essentiellement vertical, dans lequel l'écartement le plus court (Ak) de la section de profil (2.112) essentiellement droite par rapport à l'axe d'attache (12) se situe dans une zone dont la limite inférieure correspond à 2,8 fois, de préférence, à 3 fois, de préférence encore à 3,5 fois, du plus petit diamètre (D) d'un ou de chacun des trous de passage et dont la limite supérieure correspond à 5 fois, de préférence, à 4,5 fois, de préférence encore, à 4,2 fois du plus petit diamètre (D) d'un ou de chacun des trous de passage.

4. Faux-châssis selon l'une des revendications 1 à 3, **caractérisé en ce que** la section de profil (2.113) opposée au côté du support de roue présente une section de liaison (2.114) plane, sur laquelle le cordon de soudure (11) est réalisé comme un cordon de soudure essentiellement plane.

5. Faux-châssis selon l'une des revendications 1 à 4, **caractérisé en ce que** la première tôle métallique à simple coque (2.1) est réalisée comme une pièce emboutie.

6. Faux-châssis selon l'une des revendications 1 à 5, **caractérisé en ce que** la première tôle métallique à simple coque (2.1) s'étend essentiellement sur toute la longueur du longeron (2).

7. Faux-châssis selon l'une des revendications 1 à 6, **caractérisé en ce que** la deuxième tôle métallique à simple coque (2.2) s'étend sur une longueur partielle du longeron (2).

8. Faux-châssis selon l'une des revendications 1 à 7, **caractérisé en ce que** sur la section de coque en forme de profil z est reliée, de préférence soudée, au moins une pièce de montage provenant d'un groupe comprenant une traverse (3, 4); une protection de la direction (5), une tour d'attache (7) et / ou une tôle en console (19).

9. Faux-châssis selon l'une des revendications 1 à 8, **caractérisé en ce que** la deuxième tôle métallique à simple coque (2.2) est disposée sur le côté inférieur de la première tôle métallique à simple coque (2.1).

10. Faux-châssis selon l'une des revendications 1 à 9, **caractérisé en ce que** sur le côté supérieur de la première tôle métallique à simple coque (2.1) est disposée une troisième tôle métallique à simple coque (2.3) qui est reliée à la première tôle métallique à simple coque (2.1) au moyen d'au moins deux cordons de soudure (13, 14).

11. Faux-châssis selon la revendication 10, **caractérisé en ce qu'**au moins un ou au moins deux des cordons de soudure (13, 14) sont réalisés comme des cordons de soudure essentiellement plans.

12. Faux-châssis selon l'une des revendications 1 à 11, **caractérisé en ce que** la première tôle métallique à simple coque (2.1) est réalisée d'une seule pièce avec une section d'une traverse (4) ou d'une tôle (5) servant de protection de la direction.

13. Faux-châssis selon l'une des revendications 1 à 12, **caractérisé en ce que** la première tôle métallique à simple coque (2.1) est réalisée d'une seule pièce avec une tôle métallique à simple coque (2.1') correspondante d'un deuxième longeron (2').
